## Europäisches Patentamt
## European Patent Office
## Office européen des brevets

(19)

(11) Veröffentlichungsnummer: **0 150 190**
**B1**

(12)

# EUROPÄISCHE PATENTSCHRIFT

(45) Veröffentlichungstag der Patentschrift:
**20.05.87**

(21) Anmeldenummer: **84901974.0**

(22) Anmeldetag: **19.05.84**

(86) Internationale Anmeldenummer:
**PCT/DE 84/00113**

(87) Internationale Veröffentlichungsnummer:
**WO 85/00407 (31.01.85 Gazette 85/03)**

(51) Int. Cl.⁴: **F 01 N 3/02**, B 01 D 51/02,
B 03 C 3/70

(54) **ABGAS-REINIGUNGSVORRICHTUNG.**

(30) Priorität: **09.07.83 DE 3324888**

(43) Veröffentlichungstag der Anmeldung:
**07.08.85 Patentblatt 85/32**

(45) Bekanntmachung des Hinweises auf die Patenterteilung:
**20.05.87 Patentblatt 87/21**

(84) Benannte Vertragsstaaten:
**AT CH DE FR GB LI**

(56) Entgegenhaltungen:
**DE-A-2 408 511
DE-C-486 913
FR-A-2 176 604
US-A-3 312 776
US-A-4 116 790**

(73) Patentinhaber: **ROBERT BOSCH GMBH, Robert-Bosch- Platz 1, D-7016 Gerlingen- Schillerhöhe (DE)**

(72) Erfinder: **BRAUER, Ilan, Zellerstrasse 76, D-7000 Stuttgart 1 (DE)**
Erfinder: **GAUGLER, Manfred, Wilhelm- Löchele-Strasse 10, D-7140 Freiberg (DE)**
Erfinder: **KARR, Dieter, Hans- Reyhing- Strasse 47, D-7250 Leonberg (DE)**

(74) Vertreter: **Röser, Peter, c/o Robert Bosch GmbH Robert- Bosch- Platz 1, D-7016 Gerlingen-Schillerhöhe (DE)**

EP 0 150 190 B1

## Beschreibung

Die Erfindung geht von einer Vorrichtung zum Reinigen von Gasen gemäß der Gattung des Hauptanspruchs aus. Eine derartige Vorrichtung ist durch die DE-A-24 08 511 bekannt. Dort werden inhomogene elektrische Felder zwischen einer zylindrischen Innenelektrode und einzelnen Elektroden, die auf einem zylindrischen Außenmantel angeordnet sind, erzeugt. Die Zuleitung der elektrischen Spannung zu den Elektroden erfolgt durch eine einfache Durchführung der Leiter durch Wände aus Isolierstoff. Dabei sind keine besonderen Maßnahmen getroffen, um zu verhindern, daß sich aufgrund des Einflusses von sich im Bereich der elektrischen Durchführung an den Wänden unter Einfluß des dort befindlichen starken elektrischen Feldes dauerhafte Ablagerungen von elektrisch leitenden Teilchen bilden. Diese bewirken dann als Kriechstromstrecken einen hohen Energieverlust, der besonders bei der Anwendung bei Brennkraftmaschinen oder Kraftfahrzeugbrennkraftmaschinen von großem Nachteil ist. Gerade dort gefährden die Kriechströme den Energiehaushalt bzw. die Aufrechterhaltung der zur einwandfreien Funktion der Vorrichtung notwendige Spannung.

Aufgabe der Erfindung ist es, eine Einrichtung zu schaffen, bei der diese Nachteile vermieden werden. Diese Aufgabe wird erfindungsgemäß durch die Merkmale des Kennzeichens des Anspruchs 1 gelöst.

Zwar ist durch die US-A-3 312 776 eine Einrichtung bekannt, bei der eine isolierte Hochspannungsdurchführung durch eine auf Basispotential liegende Wand vorgesehen ist, wobei in dem den elektrischen Leiter der Hochspannungsdurchführung umgebenden Isolierkörper eine mit dem Basispotential verbundene Spannungsverteilungshülse aus flexibler Litze eingebettet ist. Zweck dieser Hülse ist es, eine gleiche Verteilung des elektrischen Spannungsfeldes im Bereich der Befestigung des Isolators an der Wand bereitzustellen, damit ein Durchschlagen vom Leiter durch die Isolierung zur Befestigungsstelle an der Wand vermieden wird. Diese Hülse erstreckt sich auf einen nur geringen Teil der Länge des Isolators und nur im Bereich der Wanddurchführung. Weiterhin besteht das Isolatormaterial aus Kunstharz, das gegenüber dem Leiter einen merklich abweichenden Wärmedehnungskoeffizienten aufweist, was mit einer aufwendigen Konstruktion ausgeglichen werden muß. Dabei ist die bekannte Durchführung an einem ölgefüllten Behälter vorgesehen, in dem ein Transformator angeordnet ist. Der Isolator der Durchführungsvorrichtung ist also keiner verschmutzenden Atmosphäre ausgesetzt, die die obengenannten Ablagerungen bilden könnte.

Die erfindungsgemäße Vorrichtung hat den Vorteil, daß mit geringem Aufwand die Ablagerung elektrisch leitfähiger Partikel im besonders gefährdeten Isolationsbereich zwischen den beiden Hochspannungselektroden vermieden wird. Durch die Abschirmung der Zuleitung im Durchführungsbereich, wo ansonsten hohe elektrische Feldstärken auftreten, wird die Ablagerung wirksam verhindert oder zumindest auf ein solches maß reduziert, daß mit einfachen zusätzlichen Maßnahmen wie Freibrennen einer Isolationsstrecke oder Freispülen des Isolationsraumes ohne aufwendige Vorrichtungen eine betriebssichere Funktion der Anlage ermöglicht wird.

Wegen ihrer mechanischen Stabilität hat sich eine Isolation aus Keramik besonders bewährt. Die Abschirmung läßt sich auf der Isolation in besonders einfacher und preiswerter Weise dadurch ausbilden, daß eine dünne Metallschicht im Vakuum auf die Isolation aufgedampft wird. Als äußere Isolation und mechanische Schutzschicht über der Abschirmung dient eine zweite Isolationsschicht, die vorzugsweise ebenfalls aus Keramik besteht.

Zeichnung

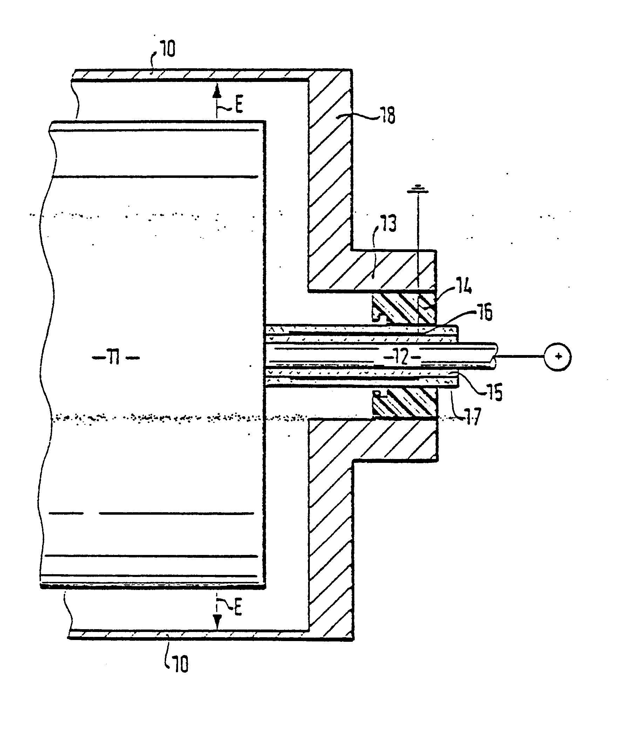

Ein Ausführungsbeispiel der Erfindung ist in der beigefügten Zeichnung dargestellt und in der nachfolgenden Beschreibung näher erläutert. Die Figur zeigt einen Längsschnitt durch die Vorrichtung im Bereich der isolierten Hochspannungsdurchführung.

Beschreibung des Ausführungsbeispiels

In der Figur ist im Schnitt ein Teil der Vorrichtung zum Reinigen von Gasen von elektrisch leitfähigen Partikeln, insbesondere zum Reinigen von Abgasen von Dieselmotoren dargestellt, wobei nur die bezüglich der elektrischen Isolation wesentlichen Teile gezeigt sind. Dabei ist mit 10 ein metallisches Gehäuse der Vorrichtung bezeichnet, welches die äußere, auf Massepotential liegende Elektrode bildet. Konzentrisch innerhalb des Gehäuses 10 sitzt eine ebenfalls zylindrische innere Elektrode 11, welche über eine Zuleitung 12 auf Hochspannungspotential gelegt ist. In der Figur ist jeweils nur eine äußere und eine innere Elektrode dargestellt, beide Elektroden können auch mehrfach vorhanden und becherförmig, konzentrisch ineinander geschachtelt sein.

Die elektrische Isolation der Vorrichtung konzentriert sich auf den Bereich zwischen einem Flansch 13 am Gehäuse 10 und der Zuleitung 12. Letztere ist in einer Isolierstoffhalterung 14 zentriert und mechanisch gehalten. Auf die Zuleitung 12 ist zunächst eine erste Isolationsschicht 15 aus Keramik aufgebracht, auf welcher eine Abschirmung 16 aus einer im Vakuum aufgedampften Metallschicht sitzt. Die Abschirmung 16 ist mechanisch und elektrisch nach außen wiederum gesichert durch eine zweite Isolationsschicht 17. Beide Isolationsschichten 15 und 17 reichen von der inneren Elektrode 11 über die Isolierstoffhalterung 14 nach außen. Die Abschirmung 16 endet aus Gründen der sicheren elektrischen Isolation entsprechend der anliegenden Hochspannung im Abstand vor der inneren Elektrode 11 und sie reicht auch nicht bis zum äußeren Ende der Isolierstoffschichten 15 und 17, damit auch in diesem Bereich keine Überschläge oder Kriechströme auftreten.

Die elektrische Kontaktierung der Abschirmung 16 ist in der Zeichnung schematisch dargestellt. Da die Abschirmung 16 ebenso wie der Flansch 13 am Gehäuse 10 auf Massepotential liegt, bereitet die elektrische Kontaktierung keine Schwierigkeiten und kann in beliebiger bekannter Weise, beispielsweise durch einen mit einer Schelle befestigten Leitungsdraht erfolgen. Die höchsten elektrischen Feldstärken treten bekanntlich dort auf, wo die kleinsten Radien der auf Hochspannungspotential liegenden Teile vorhanden sind. Dies ist bei der erfindungsgemäßen Vorrichtung im Bereich der Zuleitung 12 der Fall. Ohne die Abschirmung 16 werden elektrisch leitfähige Partikel, welche in den Raum zwischen der inneren Elektrode 11 und einer auf Massepotential liegenden Gehäusestirnwand 18 gelangen, durch Influenz zu elektrischen Dipolen, welche in Richtung zunehmender Feldstärke auf die Zuleitung 12 zuwandern und sich auf dieser niederschlagen. Durch die Abschirmung 16 wird das Feld in dem kritischsten Bereich nahezu vollständig aufgehoben, so daß die influenzierten, elektrisch leitfähigen Partikel nicht mehr in diesen Bereich wandern. Die restlichen Isolationsprobleme, welche durch Adhäsionserscheinung der elektrisch leitfähigen Partikel bedingt sind, lassen sich durch zusätzliche Maßnahmen relativ leicht lösen. In der Zeichnung ist auf die Darstellung dieser Maßnahmen verzichtet worden; sie könnten beispielsweise darin bestehen, daß Frischluft in den kritischen Bereich eingeblasen oder ein Isolationsbereich auf der Oberfläche der Keramik-Isolationsschicht 17 elektrisch freigebrannt wird.

Durch die erfindungsgemäße Ausgestaltung der Vorrichtung im Zuleitungsbereich wird dort die elektrische Feldstärke stark abgesenkt oder zu Null gemacht. Man errreicht also eine wirksame Verhinderung von Ablagerungen der elektrisch leitfähigen Partikel gerade in dem Bereich, wo beide Potentiale zusammentreffen und aufgrund der kleinsten metallischen Krümmungsradien an der Zuleitung 12 die größten Feldstärken auftreten und somit ohne die erfindungsgemäßen Maßnahmen die stärksten Ablageungen stattfinden würden. Die elektrische Abschirmung stellt also eine besonders einfache und zugleich sehr wirkungsvolle Maßnahme gegen Kriechströme und elektrische Überschläge dar, wobei die erste Isolationsschicht 15 eine ausreichende Stärke haben muß, um Durchschläge zwischen der Zuleitung 12 und der geerdeten Abschirmung 16 zu verhindern. Mit abnehmender Feldstärke verlieren die Dipole im Bereich der Zuleitung ihr Moment und somit ihre Neigung zur Ablagerung. Die Adhäsion der elektrisch leitfähigen Partikel wird mitbestimmt durch die Oberfläche der zweiten Isolationsschicht 17. Diese sollte daher besonders glatt sein. Neben Keramik, welche eine besonders hohe mechanische Festigkeit besitzt, eignet sich als Isolationsschicht 15 und/oder 17 auch eine Schicht aus Teflon, welche ebenfalls sehr wärmebeständig ist und wegen ihrer glatten Oberfläche der Adhäsion der leitfähigen Partikel entgegenwirkt. Anstelle einer aufgedampften Metallschicht als Abschirmung 16 kann selbstverständlich auch jede andere metallische Beschichtung oder Einlage dienen. Zusätzliche Maßnahmen zur Verhinderung von Ablagerungen im Isolationsbereich sind insbesondere eine zusätzliche Heizvorrichtung zum Freibrennen der Isolationsstrecke und/oder die Einleitung von Luft oder sonstigem Spülgas in den Isolationsbereich. Beide Maßnahmen sind grundsätzlich bereits vorgeschlagen worden, im Rahmen der Gestaltung des Ausführungsbeispieles ist auf deren Darstellung aus Gründen der Übersichtlichkeit verzichtet worden.

## Patentansprüche

1. Vorrichtung zum Reinigen von Gasen von elektrisch leitfähigen Partikeln mit einem das Gas leitenden Gehäuse, das mit einer Elektrodenanordnung versehen ist, mit zueinander konzentrisch liegenden Elektroden, zwischen denen ein radial gerichtetes, vom Gas quer durchströmtes, elektrisches Hochspannungsfeld liegt, dessen Feldstärke kleiner ist als die Ionisationsfeldstärke und auf durch das Feld geleitete Partikel durch Influenz eine Polarisation von Ladungen erzeugt zur Förderung von Teilchenkoagulationen und ferner mit einem dem elektrischen Feld in Strömungsrichtung des zu reinigenden Gases nachgeschalteter mechanischer Abscheider der Partikel, wobei die Zuleitung (12) der Hochspannung für eine Elektrode (11) durch eine eine andere Elektrode (10) tragende Wand (18, 13) isoliert durchgeführt wird, dadurch gekennzeichnet, daß die Einrichtung zum Reinigen von Brennkraftmaschinenabgasen dient und auf der Zuleitung (12) im Bereich der Durchführung (14) durch die Wand (13, 18) eine Isolationsschicht aus Keramik aufgebracht ist, auf der eine mit dem Potential der anderen Elektrode (10) beaufschlagte, als Dünnschicht ausgebildete Metallschicht (16) aufgebracht ist, die wiederum von einer weiteren Isolationsschicht (17) so umhüllt ist, daß die Metallschicht allseitig umschlossen und mit Abstand zum jeweiligen axialen Ende der Isolationsschichten innerhalb dieser endet.

2. Vorrichtung nach Anspruch 1, dadurch gekennzeichnet, daß die Metallschicht eine im Vakuum aufgedampfte Metallschicht ist.

## Claims

1. Device for purifying gases by removal of electrically conductive particles, with a housing through which the gas passes and which is provided with an electrode arrangement with electrodes which are located concentrically to one another and between which a radially directed electric high-voltage field is applied through which the gas flows transversely and the field strength of which is smaller than the ionization field strength and generates, by electrostatic induction, a polarization of charges on particles passed through the field, in order to promote particle coagulations, and also with a mechanical particle separator downstream of the electric field in the direction of the flow of the gas which is to be purified, the high-voltage lead (12) for one electrode (11) being taken with insulation through a wall (18, 13) which carries another electrode (10), characterized in that the device is used for purifying the exhaust gases from internal combustion engines and that, on the lead (12) in the region of the bushing (14) through the wall (13, 18), an insulating layer of ceramics is applied, on which a metal layer (16) in the form of a thin film is applied which is subject to the potential of the other electrode (10) and in turn is surrounded by a further insulation layer (17) in such a way that the metal layer is enclosed on all sides and ends within the insulation layers at a distance from the particular axial end of the latter.

2. Device according to Claim 1, characterized in that the metal layer is a metal layer vapour-deposited in vacuo.

## Revendications

1°) Dispositif pour épurer des gaz de particules conductrices d'électricité, comportant un boîtier dans lequel passe le gaz et qui est muni d'un dispositif à électrodes avec des électrodes concentriques entre lesquelles s'établit un champ de haute tension électrique dirigé radialement et traversé transversalement par le gaz, champ dont l'intensité est inférieure à l'intensité du champ d'ionisation et qui, par influence, engendre une polarisation des charges des particules traversant le champ pour favoriser la coagulation des particules et, en outre un séparateur mécanique de particules situé en aval du champ électrique dans la direction d'écoulement du gaz à nettoyer, la conduite d'alimentation (12) en haute tension de l'électrode (11) traversant de manière isolante une paroi (18, 13) portant l'autre électrode (10), caractérisé en ce que l'installation sert à épurer des gaz d'échappement de moteurs à combustion interne et sur la conduite d'alimentation (12) au niveau du passage (14) à travers la paroi (13, 18), il est prévu une couche d'isolation en matière céramique portant une couche métallique (16) en forme de couche mince soumise au potentiel de l'autre électrode (10), cette couche métallique étant elle-même entourée d'une autre couche d'isolation (17) de façon que la couche métallique soit enfermée de tous les côtés et se termine à une certaine distance de chaque extrémité axiale de la couche d'isolation, à l'intérieur de celle-ci.

2°) Dispositif selon la revendication 1, caractérisé en ce que la couche métallique est une couche métallique déposée à la vapeur sous vide.